# DEMANDE DE BREVET EUROPEEN

(11) **EP 3 734 329 A1**
(43) Date de publication de la demande: **04.11.2020**
(21) Numéro de dépôt: 20165190.8
(22) Date de dépôt: 24.03.2020
(51) Int. Cl.: G01S 17/93

(54) **SYSTÈME DE DÉTECTION D'OBJET POUR VÉHICULE AUTOMOBILE**

(30) Priorité: 18.04.2019 FR 1904156
(71) Demandeur: Aptiv Technologies Limited, St. Michael (BB)
(72) Inventeur: ROUMIER, Cyril, 92600 Asnières sur Seine (FR); TOURNABIEN, Guillaume, 77165 Saint Soupplets (FR)
(74) Mandataire: Vigand, Philippe

(57) **Abrégé**

Un système de vision (10) pour véhicule (12) automobile comprend un dispositif optique (16) de capture d'images configuré pour capturer des images d'objets (20) dans son champs de vision (18); un dispositif d'éclairage (22) comportant une pluralité d'éléments d'éclairage (24, 26) formant une matrice d'éclairage (28, 30) configurée pour illuminer le champs de vision (18) du dispositif optique (16); un dispositif de contrôle (32) relié électriquement au dispositif optique (16) et au dispositif d'éclairage (22), le dispositif de contrôle (32) étant configuré pour déterminer la nature de chaque image d'objet (20) capturé par le dispositif optique (16); le dispositif de contrôle (32) étant configuré pour localiser l'objet (20), sélectionner les éléments d'éclairage (24, 26) de la matrice d'éclairage (28, 30) pouvant illuminer l'objet (20) capturé relativement à la localisation de l'objet (20) localisé et contrôler individuellement les caractéristiques d'éclairage de chaque élément d'éclairage sélectionné de sorte à pouvoir déterminer la nature de l'image de l'objet (20) capturé par le dispositif optique (16).

## Description

### Domaine technique

La présente invention concerne un système de détection d'objet pour véhicule automobile, plus particulièrement, pour un système de détection capable de déterminer la nature d'un objet détecté sur le trajet du véhicule roulant dans des conditions de luminosité réduite.

### Etat de la technique

Dans le domaine des véhicules automobile, il est connu d'utiliser une caméra à l'avant du véhicule afin de détecter et reconnaître des obstacles sur le trajet du véhicule telle que des panneaux indicateurs ou encore d'autres usagers de la route tels que des piétons ou d'autres véhicules.

Lors de conditions de visibilité réduite, généralement les caméras comprennent leur propre dispositif d'éclairage agencé avec la caméra de sorte à pouvoir illuminer le champs de vision de la caméra. Ces dispositifs d'éclairage sont généralement encombrant, coûteux, consommateur d'énergie et sont également limité en performance de par la miniaturisation de la caméra et donc de ses éléments d'éclairage.

Il est donc important de proposer une solution nouvelle résolvant ce problème.

### Résumé de l'invention

Selon l'invention, un système de vision pour véhicule automobile comprend un dispositif optique de capture d'images configuré pour capturer des images d'objets dans son champs de vision; un dispositif d'éclairage comportant une pluralité d'éléments d'éclairage formant une matrice d'éclairage configurée pour illuminer le champs de vision du dispositif optique; un dispositif de contrôle relié électriquement au dispositif optique et au dispositif d'éclairage, le dispositif de contrôle étant configuré pour déterminer la nature de chaque image d'objet capturé par le dispositif optique; le dispositif de contrôle étant configuré pour localiser l'objet, sélectionner les éléments d'éclairage de la matrice d'éclairage pouvant illuminer l'objet capturé relativement à la localisation de l'objet localisé et contrôler individuellement les caractéristiques d'éclairage de chaque élément d'éclairage sélectionné de sorte à pouvoir déterminer la nature de l'image de l'objet capturé par le dispositif optique.

Le dispositif de contrôle peut-être configuré pour ajuster les caractéristiques d'éclairage durant une séquence temporelle temporaire non perceptible par l'œil humain, de préférence inférieure à 10 millisecondes. Le dispositif de contrôle peut être configuré pour ajuster la caractéristique d'éclairage de puissance d'éclairage de chaque élément d'éclairage de la matrice d'éclairage permettant d'illuminer l'objet capturé.

La pluralité d'éléments d'éclairage formant une matrice d'éclairage peut comporter une pluralité de diodes électroluminescente 'rouge-vert-bleu', le dispositif de contrôle étant configuré pour ajuster la couleur des diodes électroluminescentes de manière individuelle de chaque élément d'éclairage de la matrice d'éclairage permettant d'illuminer l'objet capturé.

Le système de vision peut comporter de plus un dispositif de détection d'objets configuré pour détecter la présence, dans le champs de vision du dispositif optique, d'au moins un objet, le dispositif de contrôle étant configuré pour ajuster les caractéristiques d'éclairage de manière individuelle de chaque élément d'éclairage de la matrice d'éclairage permettant d'illuminer l'objet détecté par le dispositif de détection d'objet de sorte que le dispositif de contrôle puisse déterminer la nature de l'image de l'objet capturé par le dispositif optique.

Le système de vision est apte à être embarqué dans un véhicule automobile de sorte que le système de vision peut être relié électriquement à un dispositif d'aide à la conduite du véhicule, le dispositif d'éclairage peux comporter au moins un dispositif de feux avant de véhicule ; le dispositif optique de capture d'images peut comporter une caméra de véhicule configurée pour capturer les images d'objets dans un champs de vision avant du véhicule.

Selon l'invention, une méthode de détection d'objet comportant le système de vision décrit ci-dessus comporte les étapes de : détection d'un objet dans le champs de vision du dispositif optique; localisation de l'objet détecté suite à l'étape de détection ; sélection des élément d'éclairage de la matrice d'éclairage pouvant illuminer l'objet détecté relativement à la localisation de l'objet détecté ; ajustement des caractéristiques d'éclairage des éléments d'éclairage illuminant l'objet détecté permettant la détermination de la nature de l'objet détecté.

L'étape de détection d'un objet dans le champs de vision du dispositif optique peut comprendre la détection de l'objet par un dispositif de détection d'objet dans le champs de vision du dispositif optique.

L'étape d'ajustement des caractéristiques d'éclairage peut comprendre l'ajustement de la puissance d'éclairage de chaque élément d'éclairage sélectionné de la matrice d'éclairage.

L'étape d'ajustement des caractéristiques d'éclairage peut être effective durant une séquence temporelle temporaire non perceptible par l'œil humain, de préférence inférieure à 10 millisecondes.

D'autres buts et avantages de la présente invention apparaîtront au vu de la description qui suit.

### Brève description des dessins

D'autres caractéristiques, buts et avantages de l'invention apparaîtront à la lecture de la description détaillée qui va suivre, et en regard des dessins annexés, donnés à titre d'exemple non limitatif et sur lesquels:
[Fig 1] représente un premier mode de réalisation du système de vision pour véhicule automobile selon l'invention.
[Fig 2] représente un second mode de réalisation du système de vision pour véhicule automobile selon l'invention.
[Fig 3] représente un exemple d'organigramme d'un méthode de détection d'objet comportant le système de vision de la figure 1

### Description détaillée

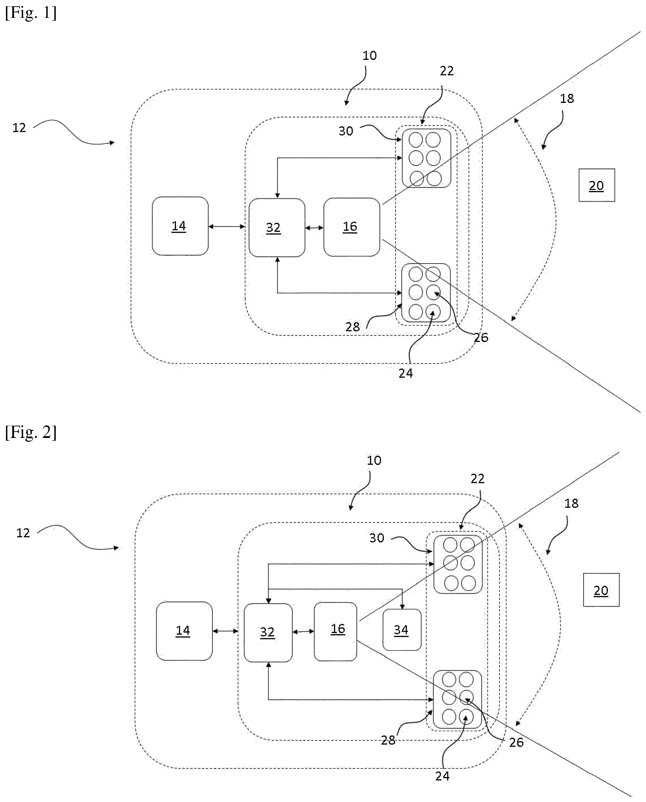

Selon la figure 1, un système de vision 10 pour véhicule 12 automobile est représenté. Le système de vision 10 coopère avec un système d'aide à la conduite 14 du véhicule 12 permettant notamment d'enclencher des fonctions sécuritaires du véhicule 12 comme par exemple, et de façon non limitative, le freinage d'urgence en cas de détection tardive d'obstacle sur le trajet du véhicule 12. Le système de vision 10 comprend principalement un dispositif optique 16 de capture d'images comme un caméra permettant la capture d'images dans son champs de vision 18. Selon le mode de réalisation représenté à la figure 1, la caméra est agencée à l'avant du véhicule 12, en position centrale, de sorte à pouvoir capturer des images dans le champs de vision avant du véhicule 12, c'est-à-dire de sorte à pouvoir détecter des objets 20 sur le trajet du véhicule 12.

Selon le mode de réalisation de la figure 1, le système de vision 10 comporte un dispositif d'éclairage 22 configuré pour illuminer le champs de vision 18 du dispositif optique 16 de sorte à pouvoir éclairer les objets 20 se situant sur le trajet du véhicule 12. Plus particulièrement, le dispositif d'éclairage 22 du champs de vision 18 du dispositif optique 16 comporte le dispositif de feux avant du véhicule 12, les feux avant comportant une pluralité d'éléments d'éclairage 24, 26 formant au moins une matrice d'éclairage 28, 30 configurée pour illuminer le champs de vision avant du véhicule 12. Plus particulièrement, la pluralité d'éléments d'éclairage 24, 26 des feux avant du véhicule 12 comporte une pluralité de diodes électroluminescente de puissance (communément appelé feux à LED selon la terminologie anglo-saxonne) configurée pour illuminer le champs de vision 18 du dispositif optique 16.

Le système de vision 10 comporte également un dispositif de contrôle 32 relié électriquement au dispositif optique 16 et au dispositif d'éclairage 22, le dispositif de contrôle 32 étant configuré pour déterminer la nature de chaque image d'objet 20 capturé par le dispositif optique 16. Le dispositif de contrôle 32 peut être aussi bien une unité électronique intelligente indépendante ou une unité électronique intelligente faisant partie intégrante du dispositif optique 16 de capture d'images ou encore faisant partie intégrante du dispositif d'éclairage 22. Le dispositif de contrôle 32 peut comprendre un microcontrôleur ou tout autre dispositif digital de traitement de signal, ainsi qu'un bloc mémoire pouvant comprendre une librairie de signature d'objets 20 permettant la reconnaissance de la nature d'objets 20 détectés par un dispositif de détection d'objets 20 tel que le dispositif optique 16 ou par un dispositif radar ou encore par un dispositif de type lidar.

On entend par 'déterminer la nature d'un objet 20', la reconnaissance de l'objet 20. Concrètement, un objet 20 peut être détecté par un dispositif sans pour autant reconnaître l'objet 20. Un objet 20 sur la trajectoire du véhicule 12 peut être détecté, de sorte que le véhicule 12 se doit de l'éviter sans pour autant avoir besoin de savoir quel type d'objet 20 a été détecté. Par contre, selon l'invention, le système de vision 10 est un système dont le but est de déterminer la nature de l'objet 20, à savoir, par exemple et de façon non limitative, si l'objet 20 détecté est un piéton, un vélo, ou encore un panneau indicateur contenant une limite de vitesse.

Lors du roulage du véhicule 12 en condition de luminosité réduite, par exemple en condition nocturne, lors de la traversée d'un tunnel ou encore lors de la traversée d'une nappe de brouillard, le dispositif de contrôle 32 est configuré pour activer l'éclairage nécessaire au dispositif optique 16 afin de pouvoir reconnaitre la nature de l'image de l'objet 20 capturé ainsi que son comportement.

Plus particulièrement, selon l'invention, le dispositif de contrôle 32 est configuré pour contrôler individuellement les caractéristiques d'éclairage de chaque élément d'éclairage 24, 26 de la matrice d'éclairage 28, 30 illuminant l'objet 20 capturé de sorte à pouvoir déterminer la nature de l'image de l'objet 20 capturé par le dispositif optique 16.

Plus précisément, lorsque l'objet 20 est détecté par le dispositif optique 16 mais dont la nature n'est pas reconnue par le dispositif de contrôle 32, le dit dispositif de contrôle 32 permet un ajustement des caractéristiques d'éclairage des éléments d'éclairage 24, 26 de la matrice d'éclairage 28, 30 permettant d'illuminer l'objet 20. Le dispositif de contrôle 32 est donc configuré pour localiser l'objet 20 détecté par le dispositif optique 16 et donc capable de sélectionner les éléments d'éclairage 24, 26 de la matrice d'éclairage 28, 30 permettant d'illuminer l'objet 20 tout en ajustant les paramètre d'éclairage desdits éléments d'éclairage 24, 26 sélectionnés de sorte que le dispositif optique 16 puisse déterminer la nature de l'image de l'objet 20 détecté préalablement par le dispositif optique 16.

Préférablement, la caractéristique d'éclairage de puissance d'éclairage des éléments d'éclairage 24, 26 permettant d'illuminer l'objet 20 capturé est ajustée à son maximum de puissance pour améliorer la capture de l'image de l'objet 20 par le dispositif optique 16. Afin de ne pas perturber, ni le conducteur du véhicule 12 équipé du système de vision 10 selon l'invention, ni d'autres véhicules circulant dans le champs d'éclairage du véhicule 12, le dispositif de contrôle 32 peut être configuré pour ajuster les caractéristiques d'éclairage durant une séquence temporelle temporaire non perceptible par l'œil humain, de préférence inférieure à 10 millisecondes. Afin de minimiser la consommation d'énergie du système de vision 10, grâce aux technologies récentes de capture d'images, une augmentation de la puissance d'éclairage à son maximum des éléments d'éclairage 24, 26 permettant d'illuminer l'objet 20 capturé durant une durée de 5 ms est suffisante pour une acquisition optimale par le dispositif optique 16 d'une image de l'objet 20.

Alternativement ou de façon additionnelle, la pluralité d'éléments d'éclairage 24, 26 formant une matrice d'éclairage 28, 30 peut comporter une pluralité de diodes électroluminescente 'rouge-vert-bleu' de sorte que le dispositif de contrôle 32 peut être configuré pour ajuster la couleur des diodes électroluminescentes de manière individuelle de chaque élément d'éclairage 24, 26 de la matrice d'éclairage 28, 30 permettant d'illuminer l'objet 20 capturé. Cette solution technique permet donc de pouvoir éclairer un objet 20, qui ayant été préalablement détecté selon un mode d'éclairage réglementaire des feux avants du véhicule 12 mais non reconnu par le dispositif de contrôle 32, selon une couleur plus favorable à la reconnaissance de l'objet 20, c'est à dire selon une onde lumineuse de longueur d'onde plus favorable à la capture de l'image de l'objet 20 par le dispositif optique 16. On entend par onde de longueur d'onde plus favorable à la capture de l'image de l'objet 20 par le dispositif optique 16, une onde permettant une meilleur réflexion de la dite onde sur un objet qu'une autre d'onde d'une autre longueur d'onde.

Ce changement de couleur des éléments d'éclairage 24, 26 de la matrice d'éclairage 28, 30 permettant d'illuminer l'objet 20 doit s'effectuer de manière non perceptible par l'œil humain et donc durant une séquence temporelle temporaire non perceptible par l'œil humain, de préférence inférieure à 10 millisecondes.

Selon le mode de réalisation de la figure 1, le dispositif de contrôle 32 est également capable de pouvoir périodiquement réaliser un ajustement des caractéristiques d'éclairage de manière individuel de chaque élément d'éclairage 24, 26 de la matrice d'éclairage 28, 30 par un balayage séquentiel de tous les éléments d'éclairage 24, 26 de la matrice d'éclairage 28, 30. Chaque élément d'éclairage 24, 26 peut être ajusté pour une durée maximal de 10 milliseconde, un autre élément d'éclairage 24, 26 étant ultérieurement également ajusté, et ainsi de suite pour l'ensemble des éléments individuels d'éclairage 24, 26. Un laps de temps d'une durée supérieur à 50 ms entre l'ajustement de chaque élément d'éclairage permet d'obtenir une séquence temporelle temporaire non perceptible par l'œil humain,

Selon la figure 2, les même éléments que la figure 1 sont représentés et conservent les mêmes références. Le système de vision 10 comporte de plus un dispositif de détection 34 d'objets 20 de type détection et estimation de la distance par la lumière ou laser, c'est-à-dire de type Lidar, ou encore de type détection et estimation de la distance par ondes électromagnétiques, c'est-à-dire de type Radar.

Le dispositif de détection 34 d'objets 20 est configuré pour détecter la présence, dans le champs de vision 18 du dispositif optique 16, d'au moins un objet 20. Ce mode de réalisation permet au dispositif de contrôle 32, en communication avec le dispositif de détection 34 d'objets 20, de pouvoir ajuster les caractéristiques d'éclairage de manière individuelle de chaque élément d'éclairage 24 , 26 de la matrice d'éclairage 28, 30 permettant d'illuminer l'objet 20 détecté par le dispositif de détection 34 d'objets 20 même lorsque le dispositif optique 16 n'a pas pu préalablement détecter l'objet 20. Plus précisément, le dispositif de détection 34 d'objets 20 permet au dispositif de contrôle 32 de localiser un objet 20 détecté par ledit dispositif de détection 34 d'objets 20 et donc de pouvoir sélectionner les éléments d'éclairage 24, 26 de la matrice d'éclairage 28, 30 permettant d'illuminer l'objet 20 tout en ajustant les paramètre d'éclairage desdits éléments d'éclairage 24, 26 sélectionnés de sorte que le dispositif optique 16 puisse capturer l'image de l'objet 20 détecté par le dispositif de détection 34 d'objets 20 et de sorte que le dispositif de contrôle 32 puisse déterminer la nature de l'image de l'objet 20 ainsi capturé par le dispositif optique 16.

Le mode de réalisation de la figure 2 peut également permettre au dispositif de contrôle 32 de combiner les informations reçus du dispositif optique 16 telle que la détection d'un objet 20 sur la trajectoire du véhicule 12 avec les informations reçus du dispositif de détection 34 d'objets 20 de sorte à confirmer ou non la présence ou non présence d'un objet 20 sur la trajectoire du véhicule 12. De préférence, le dispositif de contrôle 32 pourra considérer qu'un objet 20 détecté par le dispositif optique 16 de capture d'images mais non détecté par le dispositif de détection 34 d'objets 20 est une fausse détection de sorte que l'ajustement d'éclairage peut-être non exécuté.

A contrario, lorsqu'un objet 20 est détecté par le dispositif de détection 34 d'objets 20 et donc également localisé, le dispositif de contrôle 32 est donc configuré pour analyser l'image capturé par le dispositif optique 16 de sorte que soit la nature de l'image de l'objet 20 est reconnue et aucun ajustement d'éclairage est nécessaire, soit la nature de l'image de l'objet 20 est non reconnue et l'ajustement d'éclairage est nécessaire. Il faut comprendre par 'nature de l'image de l'objet 20 non reconnue', le cas où le dispositif optique 16 n'a pas détecté l'objet 20 ou encore le cas où le dispositif optique 16 a détecté l'objet 20 mais le dispositif de contrôle 32 n'a pas pu déterminer la nature de l'image de l'objet 20.

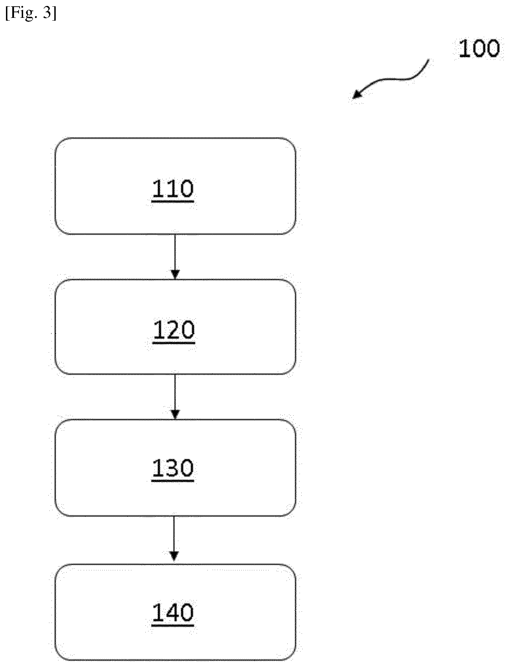

Selon la figure 3, une méthode 100 de détection d'objet 20 comportant le système de vision 10 de l'invention comporte une étape de détection 110 d'un objet 20 dans le champs de vision 18 du dispositif optique 16 de sorte que la méthode 100 comprend une étape de localisation 120 de l'objet 20 détecté. La localisation de l'objet 20 détecté peut être réalisée par le dispositif de contrôle 32 pouvant analyser les images capturées par le dispositif optique 16, ou bien en analysant les données d'un dispositif de détection 34 d'objets 20 dans le champs de vision 18 du dispositif optique 16.

La méthode 100 comprend de plus une étape de sélection 130 des éléments d'éclairage 24, 26 de la matrice d'éclairage 28, 30 pouvant illuminer l'objet 20 détecté relativement à la localisation de l'objet 20 détecté.

Puis la méthode 100 comprend une étape d'ajustement 140 des caractéristiques d'éclairage des éléments d'éclairage 24, 26 sélectionnés de la matrice d'éclairage 28, 30 permettant ainsi la détermination de la nature de l'objet 20 détecté. L'étape d'ajustement 140 des caractéristiques d'éclairage peut comprendre l'ajustement de la puissance d'éclairage de chaque élément d'éclairage 24, 26 sélectionné de la matrice d'éclairage 28, 30 permettant d'illuminer l'objet 20 détecté.

Dans le cas de d'éléments d'éclairage 24, 26 comportant une pluralité de diodes électroluminescente 'rouge-vert-bleu', l'étape d'ajustement 140 peut également comprendre une étape d'ajustement de la couleur d'éclairage de l'objet 20 par les diodes électroluminescentes 'rouge-vert-bleu' de la matrice d'éclairage 28, 30 permettant d'illuminer l'objet 20 capturé. De préférence, l'étape d'ajustement 140 des caractéristiques d'éclairage est effective durant une séquence temporelle temporaire non perceptible par l'œil humain, de préférence inférieure à 10 millisecondes.

## Revendications

1. Système de vision (10) pour véhicule (12) automobile comprenant un dispositif optique (16) de capture d'images configuré pour capturer des images d'objets (20) dans son champs de vision (18);
un dispositif d'éclairage (22) comportant une pluralité d'éléments d'éclairage (24, 26) formant une matrice d'éclairage (28, 30) configurée pour illuminer le champs de vision (18) du dispositif optique (16);
un dispositif de contrôle (32) relié électriquement au dispositif optique (16) et au dispositif d'éclairage (22), le dispositif de contrôle (32) étant configuré pour déterminer la nature de chaque image d'objet (20) capturé par le dispositif optique (16);
**caractérisé en ce que** le dispositif de contrôle (32) est configuré pour localiser l'objet (20), sélectionner les éléments d'éclairage (24, 26) de la matrice d'éclairage (28, 30) pouvant illuminer l'objet (20) capturé relativement à la localisation de l'objet (20) localisé, contrôler individuellement les caractéristiques d'éclairage de chaque élément d'éclairage sélectionné et ajuster les caractéristiques d'éclairage durant une séquence temporelle temporaire non perceptible par l'œil humain, de préférence inférieure à 10 millisecondes, de sorte à pouvoir déterminer la nature de l'image de l'objet (20) capturé par le dispositif optique (16).

2. Système (10) selon la revendication 1 **caractérisé en ce que** le dispositif de contrôle (32) est configuré pour ajuster la caractéristique d'éclairage de puissance d'éclairage de chaque élément d'éclairage (24, 26) de la matrice d'éclairage (28, 30) permettant d'illuminer l'objet (20) capturé.

3. Système (10) selon l'une quelconque des revendications précédentes **caractérisé en ce que** la pluralité d'éléments d'éclairage (24, 26) formant une matrice d'éclairage (28, 30) comporte une pluralité de diodes électroluminescente 'rouge-vert-bleu', le dispositif de contrôle (32) étant configuré pour ajuster la couleur des diodes électroluminescentes de manière individuelle de chaque élément d'éclairage (24, 26) de la matrice d'éclairage (28, 30) permettant d'illuminer l'objet (20) capturé.

4. Système (10) selon l'une quelconque des revendications précédentes **caractérisé en ce qu'**il comporte de plus un dispositif de détection (34) d'objets (20) de type radar ou lidar configuré pour détecter la présence, dans le champs de vision (18) du dispositif optique (16), d'au moins un objet (20), le dispositif de contrôle (32) étant configuré pour ajuster les caractéristiques d'éclairage de manière individuelle de chaque élément d'éclairage (24, 26) de la matrice d'éclairage (28, 30) permettant d'illuminer l'objet (20) détecté par le dispositif de détection (34) d'objets (20) de sorte que le dispositif de contrôle (32) puisse déterminer la nature de l'image de l'objet (20) capturé par le dispositif optique (16).

5. Système (10) selon l'une quelconque des revendications précédentes **caractérisé en ce que**
le système de vision (10) est relié électriquement à un dispositif d'aide à la conduite (14) du véhicule (12),
le dispositif d'éclairage (22) comporte un dispositif de feux avant de véhicule (12);
le dispositif optique (16) de capture d'images comporte une caméra de véhicule (12) configurée pour capturer les images d'objets (20) dans un champs de vision avant du véhicule (12).

6. Méthode (100) de détection d'objet (20) comportant le système de vision (10) de l'une quelconque des revendications précédentes, la méthode (100) comportant les étapes de :
détection (110) d'un objet (20) dans le champs de vision (18) du dispositif optique (16);
localisation (120) de l'objet (20) détecté suite à l'étape de détection ;
sélection (130) des éléments d'éclairage (24, 26) de la matrice d'éclairage (28, 30) pouvant illuminer l'objet (20) détecté relativement à la localisation de l'objet (20) détecté ;
ajustement (140) des caractéristiques d'éclairage des éléments d'éclairage (24, 26) illuminant l'objet (20) détecté durant une séquence temporelle temporaire non perceptible par l'œil humain, de préférence inférieure à 10 millisecondes, permettant la détermination de la nature de l'objet (20) détecté.

7. Méthode (100) selon la revendication 6, **caractérisé en ce que** l'étape de détection (110) d'un objet (20) dans le champs de vision (18) du dispositif optique (16) comprend la détection de l'objet (20) par un dispositif de détection (34) d'objets (20) dans le champs de vision (18) du dispositif optique (16).

8. Méthode (100) selon l'une quelconque des revendications 6 et 7 **caractérisée en ce que** l'étape d'ajustement (140) des caractéristiques d'éclairage comprend l'ajustement de la puissance d'éclairage de chaque élément d'éclairage (24, 26) sélectionné de la matrice d'éclairage (28, 30).
